# EUROPEAN PATENT SPECIFICATION

(11) **EP 2 095 265 B1**
(45) Date of publication and mention of the grant of the patent: **10.04.2013**
(21) Application number: 07833468.7
(22) Date of filing: 22.10.2007
(51) Int. Cl.: G06F 17/00, H04L 29/06

(54) **METHOD AND APPARATUS FOR BLOCKING SPAM DATA, AND METHOD AND APPARATUS FOR TRANSMITTING DATA FOR BLOCKING SPAM DATA**
VERFAHREN UND VORRICHTUNG ZUM BLOCKIEREN VON SPAM-DATEN UND VERFAHREN UND VORRICHTUNG ZUM SENDEN VON DATEN ZUM BLOCKIEREN VON SPAM-DATEN
PROCÉDÉ ET APPAREIL POUR LE BLOCAGE DE DONNÉES DE SPAM, ET PROCÉDÉ ET APPAREIL POUR LA TRANSMISSION DE DONNÉES EN VUE DU BLOCAGE DE DONNÉES DE SPAM

(30) Priority: 24.11.2006 KR 20060117099
(43) Date of publication of application: 02.09.2009
(73) Proprietor: Samsung Electronics Co., Ltd., Suwon-si, Gyeonggi-do, 443-742 (KR)
(72) Inventor: CHOI, Hyok-Sung, Yongin-si Gyeonggi-do 448-538 (KR); SHIN, Seong-Kook, Seoul 137-862 (KR); HAN, Se-Jun, Daejeon Metropolitan City 302-804 (KR)
(74) Representative: Harrison Goddard Foote
(86) International application number: PCT/KR2007/005159
(87) International publication number: WO 2008/062952

(56) References cited:
- KR-A- 20020 001 412
- KR-A- 20030 012 556
- KR-A- 20050 000 015
- US-A- 5 999 967
- US-A1- 2005 132 060
- US-A1- 2006 020 677
- US-B1- 7 003 731

## Description

Methods and apparatus consistent with the present invention relate to a method and apparatus for blocking spam data.

With widespread penetration of Internet and wireless communication apparatuses in a wide range of fields, it has become easier for transmitters to transmit messages or emails to many receivers at a cheaper price or for free. As transmission of messages or emails to many receivers has become easier, reception of messages or emails that receivers do not want to receive, that is, spam data, has been increasing more and more. This spam data is different from ordinary commercial mail in that the spam data is transmitted unilaterally even though a receiver does not agree to provide his or her email address or mobile phone number.

In order to block this received spam data, many methods have been suggested.

Firstly, there is a method in which if a transmitter of data is not included in a preselected group, the data transmitted by the transmitter is blocked. According to this method, even though the data may include required information, if the transmitter is not included in a group, whose data is desired to be received, by mistake or for other reasons, the required information may not be received.

Secondly, there is a method in which a receiver stores an identification (ID), email address, and Internet protocol (IP) address of a spam data transmitter in order to make a blacklist, and information received from the ID, email address, and IP address of the transmitter is blocked.

However, in this method, if the transmitter transmitting spam mails does not use his/ her ID, email address and IP address, but uses another arbitrary ID, email address, and IP address to transmit spam data, the spam data cannot be blocked.

Thirdly, there is a method in which if a predetermined word is included in the title of spam data being received, the spam data is not received.

However, according to this method, if transmitters transmitting spam data frequently change the predetermined words included in a title and transmit the data, the transmitted data cannot be blocked.

Thus, the conventional spam data blocking methods cannot effectively block spam data.

US 5,999,967 describes a method and apparatus for filtering electronic mail. The method and apparatus allows the receiver of electronic mail to make a decision to accept, reject, prioritize, or expedite delivery of a piece of electronic mail based on the value of an attached electronic stamp. The apparatus consists of two complimentary parts: a sender side part with responsibility for attaching the electronic stamp; and a receiver side part with responsibility for removing the electronic stamp and filtering the electronic mail based on the value of the electronic stamp. The method and apparatus are used in a system for reducing or eliminating the amount of junk electronic mail in the electronic mail system.

US 2005/132060 describes a system, method and apparatus for including in an electronic message or multimedia session signalling unit a valid cryptographic authentication token, verifying said token's validity upon arrival of said message or signalling unit, and thereby providing message recipients or session parties with the assurance that said message or signalling unit is from a valid sender. Provisions are provided for protecting legitimate application traffic and the network elements exchanging it from intrusion by wild packets attempting to consume application resources and thereby deny service to legitimate users or network elements. Provisions are also made to enable legitimate advertising via electronic messages, relying upon message and sender authentication to assure both advertisers and viewers of advertising messages that all participants are valid, legitimate, and accountable for any abuse that may occur.

US 2006/020677 describes strategies for notifying a user who is using an instant messaging (IM) service of the receipt of an E-mail message. The user is notified of such E-mail message via a user interface presentation provided by IM message service. The notification specification involves informing the user of identity of the person who sent the E-mail message. One technique for conveying this information is to display visual indicia on the user interface presentation in proximity to the sender's name. The IM user is thus instantly apprised of who sent the E-mail message, without requiring the user to take burdensome steps by activating the E-mail service upon every receipt of an E-mail message. The user presentation can also display information regarding how many E-mail messages each individual identified in the user interface presentation has sent the IM user. The IM user presentation can also display supplemental information which identifies the subject matter of the received E-mail messages.

US-2005/02602209-A1 discloses a system for email processing and analysis. The system includes determining if the email message is unwanted, and blocking unwanted messages. In one embodiment there is disclosed the use of security and access techniques to detect whether an email message has been originated from a known, or identified sender. Signatures, digital watermarks, passwords and other techniques can be employed.

Exemplary embodiments of the present invention overcome the above disadvantages and other disadvantages not described above. Also, the present invention is not required to overcome the disadvantages described above, and an exemplary embodiment of the present invention may not overcome any of the problems described above.

The present invention provides a method and apparatus capable of effectively blocking spam data, and a method of transmitting data for blocking spam data.

According to the method and apparatus of the present invention as described above, spam data can be effectively blocked.

Aspects and embodiments of the invention are set out in the appended claims.

According to an aspect of the present invention, there is provided a method of blocking spam data including: receiving key data, in which a key, including information for identifying a transmitter, and an electronic signature for the key are inserted as a watermark, and a digital content file; and based on the key and the electronic signature for the key inserted in the received key data, selectively blocking the digital content file received together with the key data; wherein the information for identifying a transmitter comprises at least one of image, audio and video.

The selective blocking of the digital content file may further include, if the digital content file is not blocked, removing the watermark from the key data received together with the digital content file, and then, transmitting the digital content file and the key data, from which the watermark is removed.

The selective blocking of the digital content file may further include, if the digital content file is not blocked, transmitting the digital content file and the key data together.

In the transmitting of the digital content file and the key data, if transmitter identification data for identifying a transmitter exists in addition to the key data, from which the watermark is removed, the data for identifying the transmitter instead of the key data may be transmitted together with the digital content file.

The selective blocking of the digital content file may include: extracting the key and the electronic signature for the key from the received key data; based on the extracted key and the electronic signature for the key, determining a valid period of the key and genuineness of the key; and based on the result of determining the valid period and genuineness of the key, selectively blocking the received digital content file.

The method may further include, if the result of the determining indicates that the valid period of the key has not expired and the genuineness of the key is confirmed, determining whether or not the transmitter transmitting the digital content file is a legitimate transmitter.

According to another aspect of the present invention, there is provided a method of transmitting data for blocking spam data, including transmitting key data, in which a key, including information for identifying a transmitter, and an electronic signature for the key are inserted as a watermark, together with a digital content file; wherein the information for identifying a transmitter comprises at least one of image, audio and video.

In the transmitting of the key data and the digital content file, an apparatus control command to control an apparatus receiving the digital content file may be transmitted together with the key data and the digital content file.

The apparatus control command may include at least one of a command to turn on or off the apparatus receiving the apparatus control command, and a command to output the received digital content file onto a screen.

The method may further include: receiving data to be used for generating data for identifying the transmitter; based on the received data, extracting information for identifying the transmitter transmitting data; generating a key including the extracted information for identifying the transmitter, and generating an electronic signature for the key; and inserting the generated key and electronic signature for the key, as a watermark, into the received data.

The data to be used for generating the data for identifying the transmitter may include an image, moving pictures, audio and text.

The method of blocking spam data may further include outputting notification of the reception of the digital content onto a screen based on the digital content file and the received key data.

In the outputting notification of the reception, if the digital content file is not blocked in the selective blocking, the watermark may be removed from the key data received together with the digital content file, and then, based on the key data, from which the watermark is removed, notification of the reception of the digital content file may be output onto the screen.

According to another aspect of the present invention, there is provided an apparatus for blocking spam data including: a reception unit receiving key data, in which a key, including information for identifying a transmitter, and an electronic signature for the key are inserted as a watermark, and a digital content file; and a spam blocking unit selectively blocking the digital content file received together with the key data, based on the key and the electronic signature for the key inserted into the received key data; wherein the information for identifying a transmitter comprises at least one of image, audio and video.

According to an aspect of the invention, an apparatus for transmitting data for blocking spam data comprises: a transmission unit to transmit key data, in which a key, including information for identifying a transmitter, and an electronic signature for the key are inserted as a watermark, with a digital content; wherein the information for identifying a transmitter comprises at least one of image, audio and video.

The apparatus may further include: a reception unit to receive data to be used for generating data for identifying the transmitter; an extraction unit to extract information for identifying the transmitter transmitting data, based on the received data; a key generation unit to generate a key including the extracted information for identifying the transmitter, and generating an electronic signature for the key; and a watermark insertion unit to insert the generated key and electronic signature for the key, as a watermark, in the received data.

According to another aspect of the present invention, there is provided an apparatus for notifying about reception of a digital content file, including: a reception unit receiving the digital content file and data for identifying a transmitter together; and a notification unit outputting notification of the reception of the digital content file onto a screen, based on the data for identifying the transmitter.

The apparatus for blocking spam data may further include a notification unit, if the digital content file is not blocked in the selective blocking, outputting notification of the reception of the digital content onto a screen based on the digital content file and the received key data.

The above and other features and aspects of the present invention will become more apparent by describing in detail exemplary embodiments thereof with reference to the attached drawings in which:
FIG. 1 is a diagram illustrating an apparatus for blocking spam data according to an exemplary embodiment of the present invention;
FIG. 2 is a diagram for explaining a method of receiving key data and digital content files together according to an exemplary embodiment of the present invention;
FIG. 3 is a diagram illustrating a process of receiving key data according to an exemplary embodiment of the present invention;
FIG. 4 is a diagram for explaining a method of blocking spam data according to an exemplary embodiment of the present invention;
FIG. 5 is a flowchart of a method of blocking spam data according to an exemplary embodiment of the present invention;
FIG. 6 is a diagram illustrating an apparatus for generating key data according to an exemplary embodiment of the present invention; and
FIG. 7 is a flowchart of a method of generating data for blocking spam data according to an exemplary embodiment of the present invention.

According to still another aspect of the present invention, there is provided a computer readable recording medium having embodied thereon a computer program for executing the methods for blocking spam data.

The present invention will now be described more fully with reference to the accompanying drawings, in which exemplary embodiments of the invention are shown.

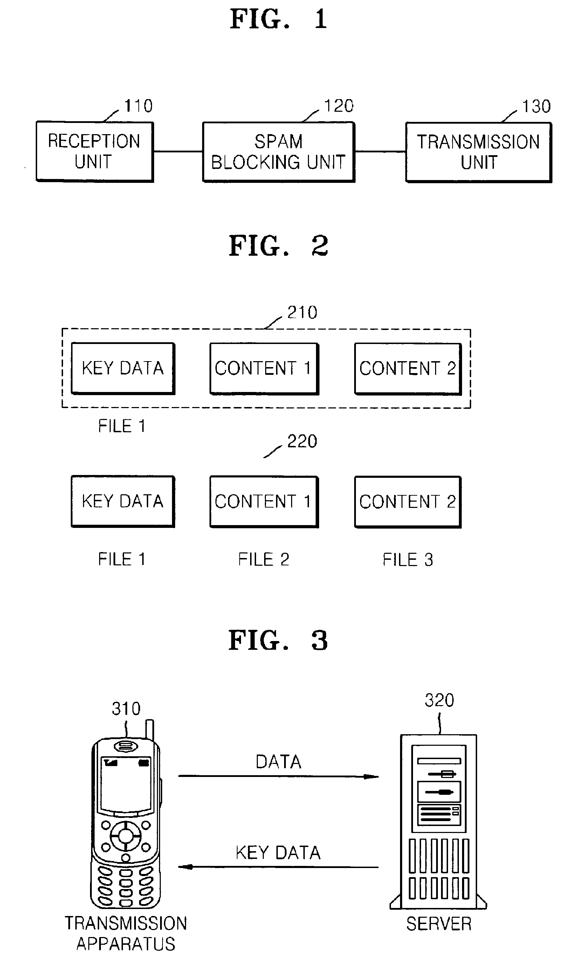

FIG. 1 is a diagram illustrating an apparatus for blocking spam data according to an exemplary embodiment of the present invention.

Referring to FIG. 1, the apparatus for blocking spam data according to the current exemplary embodiment is composed of a reception unit 110, a spam blocking unit 120, and a transmission unit 130.

The reception unit 110 receives key data and a digital content file. In the key data, a key, including information for identifying a transmitter, and an electronic signature are inserted as a watermark. When a transmitter that wants to transmit a digital content file wants to receive a digital content file for the first and only time, the digital content file is stored, and then transmitted together with the key data.

FIG. 2 is a diagram for explaining a method of receiving key data and digital content files together according to an exemplary embodiment of the present invention.

Referring to FIG. 2, key data and digital content files can be received in the form of one integrated file as indicated by reference numeral 210. Also, as indicated by reference numeral 220, key data and digital content files may be received in the form of a plurality of separate files. For example, when an email is transmitted, in the case of the format 210, the key data and digital content files are combined as one file, and only this file is attached to the email message and transmitted. In the case of the format 220, when an email is transmitted, the key data and the digital content files, i.e., Content 1 and Content 2, are attached to the email as three separate files, and then transmitted.

Here, the key data and the digital content files may be transmitted by using a variety of transmission methods, such as a multimedia message system (MMS) message of a mobile phone, in addition to the email transmission.

If the key data and the digital content files are transmitted as one file in the format 210, management of only one file is required, thereby providing convenience of transmission. However, after that time, when it is determined whether or not to block digital content files, a separate process for extracting key data from one file is required, thereby causing inconvenience.

Meanwhile, if the key data and the digital content files are transmitted as many files as in the format 220, management for transmission of the files is inconvenient, but after the transmission, when it is determined whether or not to block digital content files, a separate process of extracting the key data is not necessary, because the key data is already disclosed.

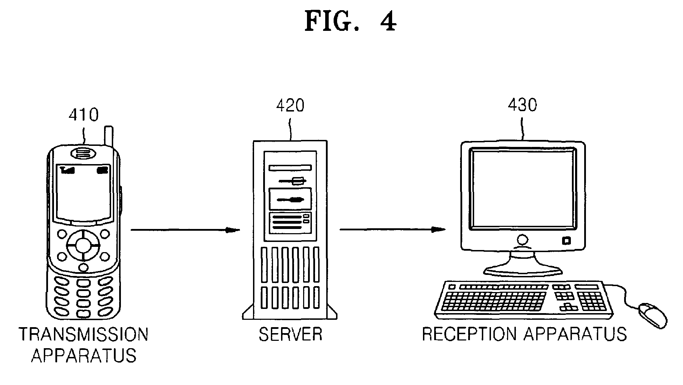

When the key data and the digital content files are transmitted, a control command for controlling an apparatus receiving the digital content files may also be transmitted together with the key data and the digital content files. The apparatus control command will be explained later with reference to FIG. 4.

FIG. 3 is a diagram illustrating a process of receiving key data according to an exemplary embodiment of the present invention.

Referring to FIG. 3, a transmitter transmits data that is to be used for generating key data, to a server 320, by using a transmission apparatus 310, for example a mobile phone or a personal computer (PC). Here, the key data becomes data for identifying the transmitter, and the data to be used for generating the key data includes all data in which a watermark can be inserted, such as image, audio and video data.

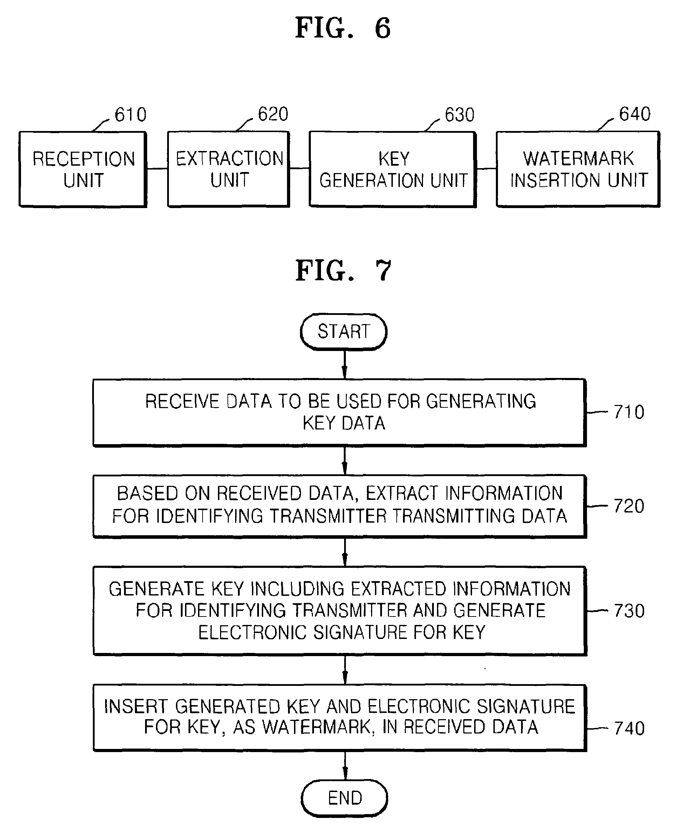

If the data from the transmission apparatus 310 is received, the server 320 extracts the information for identifying the transmitter from the received data, and then generates key data, by inserting a key including the transmitter information as a watermark. Then, the server 320 retransmits the generated key data to the transmission apparatus 310. A method of generating key data according to an exemplary embodiment of the present invention will be explained later with reference to FIGS. 6 and 7.

Here, information for identifying the transmitter may be, for example, a mobile phone number of the transmitter transmitting data for generating the key data when the data is transmitted by using a mobile phone. When the data is transmitted by using a PC, the information may be an ID or the name of the transmitter. Also, in addition to the transmitter information, additional information, such as a valid period of a key may be further included.

The spam blocking unit 120 selectively blocks a digital content file received together with key data, based on a key and an electronic signature for the key inserted into the key data.

When the spam blocking unit 120 does not block a digital content file, the transmission unit 130 removes a watermark from key data received together with the digital content file, and then, transmits the digital content file and the key data from which the watermark is removed.

In this case, when the digital content file is not blocked, the transmission unit 130 may transmit the key data received together with the digital content file without removing the watermark. The reason why the watermark is removed from the key data is that if key data including a watermark is transmitted, a person who receives the key data may obtain the right of the transmitter who transmits the key data, thereby causing a security problem. However, depending on implementations, this security problem may be solved, and if the security problem is solved by implementations, the key may be transmitted without removing the watermark.

When separate transmitter identification data for identifying a transmitter exists in addition to the key data from which a watermark is removed, the transmitter identification data can be transmitted together with the digital content file.

In this case, the data for identifying a transmitter indicates data with which the transmitter can be identified, such as a photo of the transmitter. The data for identifying a transmitter is not limited to the photo of the transmitter and includes all data allowing the transmitter to be identified.

Also, when a command to control an apparatus for receiving the digital content file is received together with the key data and the digital content file, the key data, from which the watermark is removed, the digital content file and the apparatus control command for controlling the apparatus are transmitted together.

The apparatus receiving the digital content coupled with the apparatus control command performs operations according to the apparatus control command.

FIG. 4 is a diagram for explaining a method of blocking spam data according to an exemplary embodiment of the present invention.

Referring to FIG. 4, a transmission apparatus 410, for example, a mobile phone or a PC, first transmits key data together with a digital content file to a server 420.

The server 420 receiving the key data together with the digital content file determines, based on the key and the electronic signature for the key of the digital content file, whether block the received digital content file. If the digital content file is not blocked, the server 420 removes a watermark from the key data received together with the digital content file, and then, transmits the key data, from which the watermark is removed, and the digital content file to a reception apparatus 430.

If the digital content file and the key data, from which the watermark is removed, are received, the reception apparatus 430 displays on a screen of the reception apparatus 430, the information that the digital content file is received. In this case, this reception information may be displayed by using text or graphics.

Also, in this case, when the key data from which the watermark is removed is received, the reception apparatus outputs the key data onto the screen, and when the separate data for identifying a transmitter is received, the reception apparatus 430 outputs the data onto the screen, thereby allowing the transmitter to be identified through the screen.

For example, when the key data from which the watermark is removed or the data for identifying the transmitter is an image, the image is output and when the key data or the transmitter identification data is moving pictures, the moving pictures are displayed on the screen.

In this way, when the key data or the transmitter identification data is received together with the digital content file, even if the transmitter transmits the digital content file by using any one of a mobile phone, a personal digital assistant (PDA), and a PC, the received digital content file can be classified as a digital content file received from the same transmitter, thereby allowing the reception apparatus 430 to more easily classify and use digital content files.

Meanwhile, when the apparatus control command is received together with the digital content file, the reception apparatus 430 performs operations according to the apparatus control command. As described above, the apparatus control command may be a command to turn on or off the apparatus, a command to output an image, or a command to reproduce moving pictures.

However, even when this apparatus control command is received by the reception apparatus 430, if the reception apparatus 430 is set so as not to follow the apparatus control command, or a control right is only given to a predetermined transmitter, the operations according to the apparatus control command may not be performed.

For example, assuming that a control right is given to the owner of the reception apparatus 430 or to family members of the owner, and if the result of reading the received key data indicates that a transmitter transmitting a control command is not the owner of the reception apparatus 430 or a member of the family of the owner, operations according to the control command are not performed even though the control command is received.

The explanation so far relates to the case where the apparatus for blocking spam data is mounted on the server 420. However, the apparatus for blocking spam data may be mounted to the reception apparatus 430. That is, when the apparatus for blocking spam data is mounted on the reception apparatus 430, the server 420 performs only a function of transmitting a digital content file received from the transmission apparatus 410 to the reception apparatus 430, and does not perform the function of blocking a digital content file. The function of blocking a digital content file is performed by the reception apparatus 430 itself.

When the apparatus for blocking spam data is mounted on the reception apparatus 430, the reception apparatus 430 may generate key data and retransmit the key data to the transmission apparatus 410.

In other words, the reception apparatus 430 receives a request to generate key data, data required for generating the key data, and transmitter information from the transmission apparatus 410. Then, according to the setting of the reception apparatus 430 or selection by a user, the reception apparatus 430 inserts a key including the transmitter information as a watermark, thereby generating key data, and then, retransmits the key data to the transmission apparatus 410.

Also, depending on implementations, the transmission apparatus 410 may transmit key data and a digital content file to the reception apparatus 430 without a server 420. Also, in this case, the reception apparatus 430 performs the function of blocking a digital content file.

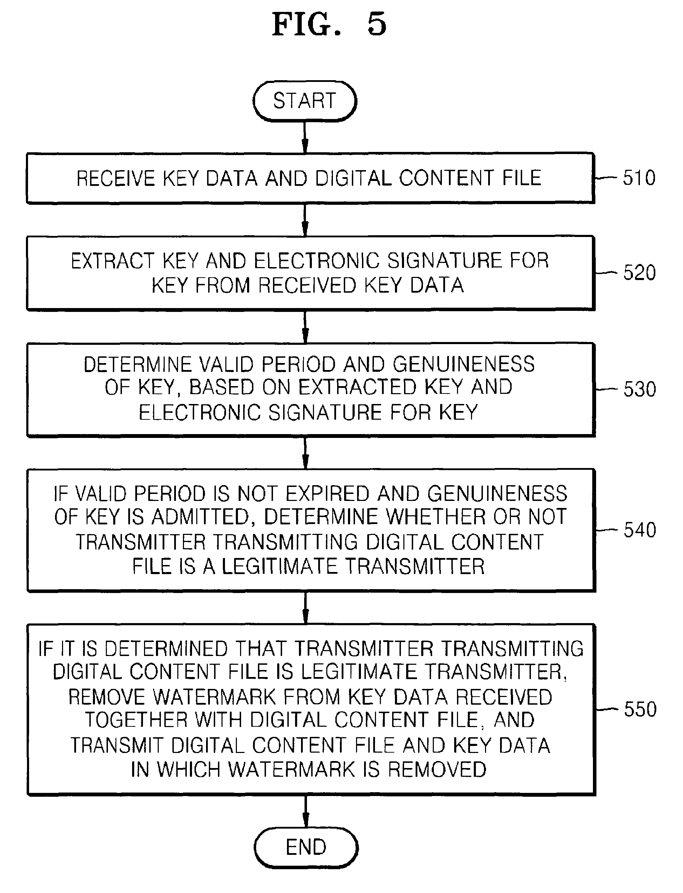

FIG. 5 is a flowchart of a method of blocking spam data according to an exemplary embodiment of the present invention.

In operation 510, key data and a digital content file are received together.

As described above, when the digital content file is received, an apparatus control command for controlling the apparatus receiving the digital content may be received together with the digital content file.

In operation 520, a key and an electronic signature for the key are extracted from the received key data.

In operation 530, a valid period of the key and the genuineness of the key are determined based on the extracted key and electronic signature for the key.

Here, the valid period of the key is included together with the key. The reason why the valid period of the key is determined is to confirm that a transmitter transmitting data by using the key is not a person transmitting spam data, but a legitimate transmitter. That is, when a key is generated in a server, a valid period is set, and when the data is transmitted by using the key data within the valid period, the transmitted data is recognized as normal data, not spam data. This setting of a valid period can be effectively used for the case where email or data is transmitted by using a server that has a regulation of charging for transmission of an email or mobile phone data.

Also, the genuineness of the electronic signature of a key can be evaluated by an external evaluation organization, thereby confirming the genuineness of the key.

The reason why the genuineness of the key is determined is to determine whether or not the key data including the key is forged or counterfeited, or whether or not the key data is fraudulently used.

In operation 540, if the valid period of the key has not expired and the genuineness of the key is confirmed, it is determined whether the transmitter transmitting the digital content file is a legitimate transmitter.

In this case, the legitimate transmitter is a person who does not have reasons for disqualification, such as an illegal transmitter, a person with a previous record of transmitting spam mail, and a fee defaulter.

For example, the illegal transmitter is a person who illegally uses a key medium, or who has previously distributed illegal software, thereby having been registered in an illegal transmitter list. The person with a previous record of transmitting spam mail is a person who previously transmitted spam mail, thereby having been registered in a spam mail

transmitter list. Also, the fee defaulter is a person who transmitted data, by using a server that has a regulation of charging for transmission of an email or mobile phone data, but did not pay the fees for the transmission. Based on the list of illegal transmitters, the list of spam mail transmitters, and the list of fee defaulters, the spam blocking unit 120 determines whether the transmitter transmitting the digital content file is a legitimate transmitter.

The reason why it is determined in operation 540 whether the transmitter is a legitimate transmitter is to restrict transmission by the transmitter if the transmitter is included in the list of the illegal transmitters, the list of the spam mail transmitter, or the list of fee defaulters in operation 540, even though the transmitter transmits the digital content file by using the key data authenticated in operation 530.

In operation 550, if it is determined that the transmitter transmitting the digital content file is a legitimate transmitter, a watermark is removed from the key data received together with the digital content file, and then, the digital content file and the key data, from which the watermark is removed, are transmitted.

In this case, as described above, if the apparatus control command for controlling the apparatus receiving the digital content file is received together with the key data and the digital content file, the apparatus control command is transmitted together with the digital content file. Also, as described above, if separate data for identifying the transmitter exists in addition to the key data, the data for identifying the transmitter can be transmitted instead of the key data.

Also, as described above, depending on implementations, key data from which the watermark is not removed, and the digital content file may be transmitted.

FIG. 6 is a diagram illustrating an apparatus for generating key data according to an exemplary embodiment of the present invention.

Referring to FIG. 6, the apparatus for generating key data according to the current exemplary embodiment is composed of a reception unit 610, an extraction unit 620, a key generation unit 630, and a watermark insertion unit 640.

The reception unit 610 receives data to be used for generating data for identifying a transmitter.

As described above, the data for identifying a transmitter is data with which the transmitter can be identified, such as a photo of the transmitter. The data for identifying a transmitter is not limited by formats, such as image, audio, and video formats.

Based on the received data, the extraction unit 620 extracts information for identifying a transmitter transmitting data.

As described above, the received data may include a mobile phone number, or an email address of the transmitter transmitting the data, or a transmitter identification (ID), and this information becomes the information for identifying the transmitter.

The key generation unit 630 generates a key including the extracted information for identifying the transmitter, and generates an electronic signature for the key.

The watermark insertion unit 640 inserts the generated key and the electronic signature for the key as a watermark, into the received data.

FIG. 7 is a flowchart of a method of generating data for blocking spam data according to an exemplary embodiment of the present invention.

In operation 710, data to be used for generating key data is received.

In operation 720, based on the received data, information for identifying a transmitter transmitting data is extracted.

In operation 730, a key including the extracted information for identifying the transmitter is generated and an electronic signature for the key is generated.

Here, as described above, additional information, such as a valid period of the key itself, can also be included.

In operation 740, the generated key and the electronic signature for the key are inserted as a watermark into the received data.

If the key including the information for identifying the transmitter and the electronic signature for the key are inserted as a watermark into the received data in this way, key data is generated, and the thus generated key data is retransmitted to the transmission apparatus.

According to the method and apparatus of the present invention as described above, spam data can be effectively blocked.

The present invention can also be embodied as computer readable codes on a computer readable recording medium. The computer readable recording medium is any data storage device that can store data which can be thereafter read by a computer system.

Examples of the computer readable recording medium include read-only memory (ROM), random-access memory (RAM), CD-ROMs, magnetic tapes, floppy disks, and an optical data storage devices.

While the present invention has been particularly shown and described with reference to exemplary embodiments thereof, it will be understood by those of ordinary skill in the art that various changes in form and details may be made therein without departing from the scope of the present invention as defined by the following claims. The exemplary embodiments should be considered in a descriptive sense only and not for purposes of limitation. Therefore, the scope of the invention is defined not by the detailed description of the invention but by the appended claims, and all differences within the scope will be construed as being included in the present invention.

## Claims

1. A method of blocking spam data, the method comprising:
receiving (510) a digital content file (210; 220), and key data (210; 220) in which a key, including information for identifying a transmitter, and an electronic signature for the key are inserted as a watermark; and
selectively blocking the digital content file received with the key data based on the key and the electronic signature for the key inserted in the received key data;
wherein the information for identifying a transmitter comprises at least one of image, audio and video.

2. The method of claim 1, wherein the selectively blocking the digital content file (210; 220) further comprises, if the digital content file (210; 220) is not blocked, removing (550) the watermark from the key data (210; 220) received with the digital content file (210; 220), and transmitting (550) the digital content file (210; 220) and the key data (210; 220) from which the watermark is removed.

3. The method of claim 1, wherein the selectively blocking the digital content file (210; 220) further comprises, if the digital content file (210; 220) is not blocked, transmitting the digital content file (210; 220) with the key data (210; 220).

4. The method of claim 2, wherein in the transmitting (550) the digital content file (210; 220) and the key data (210; 220) from which the watermark is removed, if transmitter identification data for identifying the transmitter exists in addition to the key data (210; 220) from which the watermark is removed, the transmitter identification data, instead of the key data (210; 220), is transmitted with the digital content file (510; 520).

5. The method of claim 1, wherein the selectively blocking the digital content file (210; 220) comprises:
extracting (520) the key and the electronic signature for the key from the key data (210; 220);
determining (530) a valid period of the key and genuineness of the key based on the extracted key and the electronic signature for the key; and
selectively blocking the received digital content file (210; 220) based on the result of determining (530) the valid period and the genuineness of the key.

6. The method of claim 1, the method further comprising:
if the digital content file is not blocked in the selectively blocking, outputting notification of the receiving of the digital content onto a screen based on the digital content file (210; 220) and the key data (210; 220).

7. A method of transmitting data for blocking spam data, the method comprising transmitting key data (210; 220), in which a key, including information for identifying a transmitter, and an electronic signature for the key are inserted as a watermark, with a digital content file; wherein the information for identifying a transmitter comprises at least one of image, audio and video.

8. The method of claim 7, the method further comprising:
receiving (710) data to be used for generating data for identifying the transmitter transmitting the data;
based on the data extracting (720) information for identifying the transmitter;
generating (730) the key including the information for identifying the transmitter, and generating the electronic signature for the key; and
inserting (740) the key and the electronic signature for the key, as a watermark, into the data, which is received.

9. An apparatus for blocking spam data, the apparatus comprising:
a reception unit (110) arranged to receive a digital content file (210; 220) and key data (210; 220), in which a key, including information for identifying a transmitter which transmits the digital content file, and an electronic signature for the key are inserted as a watermark; and
a spam blocking unit (120) arranged to selectively block the digital content file (210; 220) received with the key data, based on the key and the electronic signature for the key inserted into the received key data (210; 220);
wherein the information for identifying a transmitter comprises at least one of image, audio and video.

10. The apparatus of claim 9, the apparatus further comprising:
a notification unit arranged to, if the digital content file is not blocked in the selective blocking, output notification of the receiving of the digital content onto a screen based on the digital content file and the key data.

11. An apparatus for transmitting data for blocking spam data, the apparatus comprising:
a transmission unit arranged to transmit key data (210; 220) in which a key; including information for identifying a transmitter, and an electronic signature for the key are inserted as a watermark, with a digital content file (210; 220);
wherein the information for identifying a transmitter comprises at least one of image, audio and video.

12. The apparatus of claim 11, the apparatus further comprising:
a reception unit (610) arranged to receive data to be used for generating data for identifying the transmitter;
an extraction unit (620) arranged to extract information for identifying the transmitter, based on the data;
a key generation unit (630) arranged to generate the key including the extracted information for identifying the transmitter, and generate the electronic signature for the key; and
a watermark insertion unit (640) arranged to insert the key and the electronic signature for the key, as a watermark, in the data.

13. A computer readable medium comprising computer program code means adapted to perform, when run on a computer, the steps of:
receiving a digital content file (210; 220) and key data (210; 220) in which a key, including information for identifying a transmitter, and an electronic signature for the key are inserted as a watermark; and
selectively blocking the digital content file (210; 220) received with the key data (210; 220) based on the key and the electronic signature for the key inserted in the received key data;
wherein the information for identifying a transmitter comprises at least one of image, audio and video.

## Patentansprüche

1. Verfahren zum Blockieren von Spam-Daten, das Folgendes beinhaltet:
Empfangen (510) einer Datei (210; 220) mit digitalem Inhalt und von Schlüsseldaten (210; 220), in die ein Schlüssel, einschließlich Informationen zum Identifizieren eines Senders, und eine elektronische Signatur für den Schlüssel als Wasserzeichen eingefügt sind; und
selektives Blockieren der mit den Schlüsseldaten empfangenen Datei mit digitalem Inhalt auf der Basis des Schlüssels und der elektronischen Signatur für den Schlüssel, die in die empfangenen Schlüsseldaten eingefügt sind;
wobei die Informationen zum Identifizieren eines Senders wenigstens eines aus Bild, Audio und Video umfassen.

2. Verfahren nach Anspruch 1, wobei das selektive Blockieren der Datei (210; 220) mit digitalem Inhalt ferner Folgendes beinhaltet: Entfernen (550), wenn die Datei (210; 220) mit digitalem Inhalt nicht blockiert ist, des Wasserzeichens aus den mit der Datei (210; 220) mit digitalem Inhalt empfangenen Schlüsseldaten (210; 220), und Senden (550) der Datei (210; 220) mit digitalem Inhalt und der Schlüsseldaten (210; 220), aus denen das Wasserzeichen entfernt wurde.

3. Verfahren nach Anspruch 1, wobei das selektive Blockieren der Datei (210; 220) mit digitalem Inhalt ferner das Senden, wenn die Datei (210; 220) mit digitalem Inhalt nicht blockiert ist, der Datei (210; 220) mit digitalem Inhalt mit den Schlüsseldaten (210; 220) beinhaltet.

4. Verfahren nach Anspruch 2, wobei beim Senden (550) der Datei (210; 220) mit digitalem Inhalt und der Schlüsseldaten (210; 220), aus denen das Wasserzeichen entfernt wurde, wenn Senderidentifikationsdaten zum Identifizieren des Senders zusätzlich zu den Schlüsseldaten (210; 220) existieren, aus denen das Wasserzeichen entfernt wurde, die Senderidentifikationsdaten anstatt der Schlüsseldaten (210; 220) mit der Datei (510; 520) mit digitalem Inhalt gesendet werden.

5. Verfahren nach Anspruch 1, wobei das selektive Blockieren der Datei (210; 220) mit digitalem Inhalt Folgendes beinhaltet:
Extrahieren (520) des Schlüssels und der elektronischen Signatur für den Schlüssel aus den Schlüsseldaten (210; 220);
Ermitteln (530) einer Gültigkeitsperiode des Schlüssels und der Echtheit des Schlüssels auf der Basis des extrahierten Schlüssels und der elektronischen Signatur für den Schlüssel; und
selektives Blockieren der empfangenen Datei (210; 220) mit digitalem Inhalt auf der Basis des Ergebnisses der Ermittlung (530) der Gültigkeitsperiode und der Echtheit des Schlüssels.

6. Verfahren nach Anspruch 1, wobei das Verfahren ferner Folgendes beinhaltet:
Ausgeben, wenn die Datei mit digitalem Inhalt beim selektiven Blockieren nicht blockiert wird, einer Benachrichtung über den Empfang des digitalen Inhalts auf einem Bildschirm auf der Basis der Datei (210; 220) mit digitalem Inhalt und der Schlüsseldaten (210; 220).

7. Verfahren zum Senden von Daten zum Blockieren von Spam-Daten, wobei das Verfahren das Senden von Schlüsseldaten (210; 220), in denen ein Schlüssel, einschließlich Informationen zum Identifizieren eines Senders, und eine elektronische Signatur für den Schlüssel als Wasserzeichen eingefügt sind, mit einer Datei mit digitalem Inhalt beinhaltet; wobei die Informationen zum Identifizieren eines Senders wenigstens eines aus Bild, Audio und Video beinhalten.

8. Verfahren nach Anspruch 7, wobei das Verfahren ferner Folgendes beinhaltet:
Empfangen (710) von Daten zur Verwendung zum Erzeugen von Daten zum Identifizieren des die Daten sendenden Senders;
auf der Basis des Extrahierens (720) von Informationen zum Identifizieren des Senders:
Erzeugen (730) des Schlüssels einschließlich der Informationen zum Identifizieren des Senders und Erzeugen der elektronischen Signatur für den Schlüssel; und
Einfügen (740) des Schlüssels und der elektronischen Signatur für den Schlüssel als Wasserzeichen in die Daten, die empfangen werden.

9. Vorrichtung zum Blockieren von Spam-Daten, wobei die Vorrichtung Folgendes umfasst:
eine Empfangseinheit (110) zum Empfangen einer Datei (210; 220) mit digitalem Inhalt und von Schlüsseldaten (210; 220), in denen ein Schlüssel, einschließlich Informationen zum Identifizieren eines Senders, der die Datei mit digitalem Inhalt sendet, und eine elektronische Signatur für den Schlüssel als Wasserzeichen eingefügt sind; und
eine Spam-Blockiereinheit (120) zum selektiven Blockieren der mit den Schlüsseldaten empfangenen Datei (210; 220) mit digitalem Inhalt auf der Basis des Schlüssels und der elektronischen Signatur für den Schlüssel, die in die die empfangenen Schlüsseldaten (210; 220) eingefügt sind;
wobei die Informationen zum Identifizieren eines Senders wenigstens eines aus Bild, Audio und Video beinhalten.

10. Vorrichtung nach Anspruch 9, wobei die Vorrichtung ferner Folgendes umfasst:
eine Benachrichtigungseinheit, um, wenn die Datei mit digitalem Inhalt beim selektiven Blockieren nicht blockiert wird, eine Benachrichtigung über den Empfang des digitalen Inhalts auf einem Bildschirm auf der Basis der Digitalinhaltsdatei und der Schlüsseldaten auszugeben.

11. Vorrichtung zum Senden von Daten zum Blockieren von Spam-Daten, wobei die Vorrichtung Folgendes umfasst:
eine Sendeeinheit zum Senden von Schlüsseldaten (210; 220), in der ein Schlüssel einschließlich Informationen zum Identifizieren eines Senders, und eine elektronische Signatur für den Schlüssel als Wasserzeichen eingefügt sind, mit einer Datei (210; 220) mit digitalem Inhalt;
wobei die Informationen zum Identifizieren eines Senders wenigstens eines aus Bild, Audio und Video beinhalten.

12. Vorrichtung nach Anspruch 11, wobei die Vorrichtung ferner Folgendes umfasst:
eine Empfangseinheit (610) zum Empfangen von Daten zur Verwendung zum Erzeugen von Daten zum Identifizieren des Senders;
eine Extraktionseinheit (620) zum Extrahieren von Informationen zum Identifizieren des Senders auf der Basis der Daten;
eine Schlüsselerzeugungseinheit (630) zum Erzeugen des Schlüssels einschließich der extrahierten Informationen zum Identifizieren des Senders und zum Erzeugen der elektronischen Signatur für den Schlüssel; und
eine Wasserzeicheneinfügungseinheit (640) zum Einfügen des Schlüssels und der elektronischen Signatur für den Schlüssel als Wasserzeichen in die Daten.

13. Computerlesbares Medium, das Computerprogrammcode umfasst, um bei Abarbeitung auf einem Computer die folgenden Schritte auszuführen:
Empfangen einer Datei (210; 220) mit digitalem Inhalt und von Schlüsseldaten (210; 220), in denen ein Schlüssel, einschließlich Informationen zum Identifizieren eines Senders, und eine elektronische Signatur für den Schlüssel als Wasserzeichen eingefügt sind; und
selektives Blockieren der mit den Schlüsseldaten (210; 220) empfangenen Datei (210; 220) mit digitalem Inhalt auf der Basis des Schlüssels und der elektronischen Signatur für den Schlüssel, die in die empfangenen Schlüsseldaten eingefügt sind;
wobei die Informationen zum Identifizieren eines Senders wenigstens eines aus Bild, Audio und Video beinhalten.

## Revendications

1. Procédé de blocage de données de spam, le procédé comprenant les opérations consistant à :
recevoir (510) un fichier à contenu numérique (210 ; 220), et des données de clé (210 ; 220) dans lesquelles une clé, englobant des informations permettant d'identifier un émetteur, et une signature électronique pour la clé, sont insérées sous la forme d'un filigrane ; et
bloquer de façon sélective le fichier à contenu numérique reçu avec les données de clé, sur la base de la clé et de la signature électronique pour la clé insérée dans les données de clé reçues ;
cas dans lequel les informations permettant d'identifier un émetteur comportent au moins l'un des éléments suivants, à savoir : image, audio et vidéo.

2. Procédé selon la revendication 1, le blocage sélectif du fichier à contenu numérique (210 ; 220) comprenant en outre les opérations suivantes : si le fichier à contenu numérique (210; 220) n'est pas bloqué, enlever (550) le filigrane dans les données de clé (210 ; 220) ayant été reçues avec le fichier à contenu numérique (210 ; 220), et transmettre (550) le fichier à contenu numérique (210 ; 220) et les données de clé (210 ; 220) à partir desquelles le filigrane a été enlevé.

3. Procédé selon la revendication 1, le blocage sélectif du fichier à contenu numérique (210 ; 220) comprenant en outre l'opération suivante : si le fichier à contenu numérique (210; 220) n'est pas bloqué, transmettre le fichier à contenu numérique (210 ; 220) avec les données de clé (210 ; 220).

4. Procédé selon la revendication 2, lors de la transmission (550) du fichier à contenu numérique (210 ; 220) et des données de clé (210 ; 220) à partir desquelles le filigrane a été enlevé, dans le cas où des données d'identification d'émetteur permettant d'identifier l'émetteur existent en plus des données de clé (210 ; 220) à partir desquelles le filigrane a été enlevé, les données d'identification de l'émetteur étant alors transmises avec le fichier à contenu numérique (510 ; 520) à la place des données de clé (210 ; 220).

5. Procédé selon la revendication 1, le blocage sélectif du fichier à contenu numérique (210 ; 220) comprenant les opérations consistant à :
extraire (520) la clé, et la signature électronique pour la clé, à partir des données de clé (210 ; 220) ;
déterminer (530) une période de validité pour la clé et l'authenticité de la clé, sur la base de la clé ayant été extraite et de la signature électronique pour la clé ; et
bloquer de façon sélective le fichier à contenu numérique reçu (210 ; 220) sur la base du résultat obtenu après la détermination (530) de la période de validité et de l'authenticité de la clé.

6. Procédé selon la revendication 1, le procédé comprenant en outre l'opération suivante :
si le fichier à contenu numérique n'est pas bloqué lors du blocage sélectif, présenter sur un écran une notification relative à la réception du contenu numérique, sur la base du fichier à contenu numérique (210 ; 220) et des données de clé (210 ; 220).

7. Procédé de transmission de données en vue du blocage de données de spam, le procédé comprenant la transmission de données de clé (210 ; 220) dans lesquelles une clé, englobant des informations permettant d'identifier un émetteur, et une signature électronique pour la clé, sont insérées sous la forme d'un filigrane, avec un fichier à contenu numérique ; cas dans lequel les informations permettant d'identifier un émetteur comportent au moins l'un des éléments suivants, à savoir : image, audio et vidéo.

8. Procédé selon la revendication 7, le procédé comprenant en outre les opérations consistant à :
recevoir (710) des données destinées à être utilisées pour la génération de données permettant d'identifier l'émetteur qui transmet les données ;
sur la base des données, extraire (720) des informations permettant d'identifier l'émetteur ;
générer (730) la clé laquelle englobe les informations permettant d'identifier l'émetteur, et générer la signature électronique pour la clé ; et
insérer (740) la clé, ainsi que la signature électronique pour la clé, sous la forme d'un filigrane, dans les données qui sont reçues.

9. Appareil destiné à bloquer des données de spam, l'appareil comprenant :
une unité de réception (110) agencée pour recevoir un fichier à contenu numérique (210 ; 220) et des données de clé (210 ; 220) dans lesquelles une clé, englobant des informations permettant d'identifier un émetteur qui transmet le fichier à contenu numérique, et une signature électronique pour la clé, sont insérées sous la forme d'un filigrane ; et
une unité de blocage de spam (120) agencée pour bloquer de façon sélective le fichier à contenu numérique (210; 220), reçu avec les données de clé, sur la base de la clé et de la signature électronique pour la clé insérée dans les données de clé reçues (210 ; 220) ;
cas dans lequel les informations permettant d'identifier un émetteur comportent au moins l'un des éléments suivants, à savoir : image, audio et vidéo.

10. Appareil selon la revendication 9, l'appareil comprenant en outre :
une unité de notification qui, dans le cas où le fichier à contenu numérique n'est pas bloqué lors du blocage sélectif, est agencée pour présenter sur un écran une notification relative à la réception du contenu numérique, sur la base du fichier à contenu numérique et des données de clé.

11. Appareil destiné à transmettre des données pour bloquer les données de spam, l'appareil comprenant :
une unité de transmission agencée pour transmettre des données de clé (210 ; 220) dans lesquelles une clé, englobant des informations permettant d'identifier un émetteur, et une signature électronique pour la clé, sont insérées sous la forme d'un filigrane, avec un fichier à contenu numérique (210 ; 220) ;
cas dans lequel les informations permettant d'identifier un émetteur comportent au moins l'un des éléments suivants, à savoir : image, audio et vidéo.

12. Appareil selon la revendication 11, l'appareil comprenant en outre :
une unité de réception (610) agencée pour recevoir des données destinées à être utilisées pour la génération de données permettant d'identifier l'émetteur ;
une unité d'extraction (620) agencée pour extraire des informations permettant d'identifier l'émetteur, sur la base des données ;
une unité de génération de clé (630) agencée pour générer la clé englobant les informations extraites permettant d'identifier l'émetteur, et pour générer la signature électronique pour la clé ; et
une unité d'insertion de filigrane (640) agencée pour insérer la clé, et la signature électronique pour la clé, sous la forme d'un filigrane, dans les données.

13. Support lisible par ordinateur comprenant des moyens de code-programme informatique conçus pour effectuer les étapes suivantes lors de leur exploitation sur un ordinateur :
recevoir un fichier à contenu numérique (210 ; 220), et des données de clé (210 ; 220) dans lesquelles une clé, englobant des informations permettant d'identifier un émetteur, et une signature électronique pour la clé, sont insérées sous la forme d'un filigrane ; et
bloquer de façon sélective le fichier à contenu numérique (210 ; 220) reçu avec les données de clé (210 ; 220), sur la base de la clé et de la signature électronique pour la clé insérée dans les données de clé reçues ;
cas dans lequel les informations permettant d'identifier un émetteur comportent au moins l'un des éléments suivants, à savoir : image, audio et vidéo.
